# EUROPEAN PATENT SPECIFICATION

(11) **EP 0 722 797 B1**
(45) Date of publication and mention of the grant of the patent: **16.12.1998**
(21) Application number: 96200520.3
(22) Date of filing: 04.05.1992
(51) Int. Cl.: B23B 27/08

(54) **Arrangement for tools for restricted spaces**
Anordnung für Werkzeuge in eingeschränkten Räumen
Arrangement pour des outils dans des espaces restreintes

(30) Priority: 02.05.1991 SE 9101323
(43) Date of publication of application: 24.07.1996
(62) Divisional of application: 92910056.8
(73) Proprietor: MIRCONA AB, S-801 33 Gävle (SE)
(72) Inventor: Mihic, Wlajko, S-802 67 Gävle (SE)
(74) Representative: Nordén, J. Ake

(56) References cited:
- EP-A- 0 268 001
- SE-B- 337 732
- SE-B- 373 515
- SE-B- 463 753
- US-A- 2 924 129
- US-A- 3 298 254
- US-A- 3 754 309
- US-A- 4 102 591
- US-A- 4 602 897
- US-A- 4 714 384
- US-A- 5 392 674

## Description

### Technical field

The invention relates to a tool arrangement for cutting machining operations, according to the preamble of claim 1 and as known from US-A-4102591.

Tools intended for operations of this kind are previously disclosed, and as a general rule comprise a cutter of hard metal, carbide material or similar attached by means of a threaded connection to the end of a shaft or similar capable of being inserted into the hole or the tube, in which case the arrangement is such that, in order to remove a worn cutter or in order to fit a new one, it is necessary fully to unscrew a screw passing through the cutter before the cutter can be removed or attached. The fact that it is necessary to keep track not only of the cutter, which in many cases is very small, but also of a loose screw, and to fit the latter into a threaded hole in the shaft, makes the operation difficult, in addition to which there is always the risk of using a cutter for an excessive period in order to avoid having to change the cutter.

US-A-4102591 reveals a cutting tool including a holder with an end face intended to support an insert. The end face is provided with surface portions adapted to hold the insert in a defined predetermined position once a screw passing through a hole in the insert is threaded into a threaded hole at the end portion of the holder body. The known cutting tool is an example of the type mentioned above, where, in order to replace a worn insert, the screw must be completely withdrawn, the worn insert removed, a new insert applied at the end of the holder and the screw inserted through the hole of the insert, aligned with the threaded hole at the holder and tightened.

Another example of known art is revealed in US-A-2924129 but in that example it is necessary not only to remove and manipulate a screw but also a retainer means interposed between the screw head and an insert or bit and adapted to clamp the insert or bit against an end face of a holder body. The screw is arranged to press the retainer against the insert or bit and thereby press the latter against a seat at the end of a holder means on tightening of the screw engaging a threaded bore at the holder body.

### Object of the invention

The object of the invention is to make available an improved arrangement which, at the same time as it provides a secure grip, also facilitates the replacement of cutters to a considerable degree, in conjunction with which no handling of loose components, apart from the cutter itself, is called for.

### Description of the invention

The idea behind the invention is the provision at the end part of the shaft of a seat, which provides positioning of, and a stable support for a cutter in at least two of the principal directions utilized in the machining operation, so that the stresses imposed on the cutter during such machining are transferred in an effective fashion to the shaft, the arrangement on the shaft of at least one tightenable fastening device which, on tightening, engages with the cutter and forces opposing surfaces on the seat, and the arrangement on the cutter of holder and the cutter to interact in a stabilizing way a positioning means to be engaged by the fastening device in its holding position and allowing displacement of the cutter relative to the holder seat whilst still remaining in contact therewith.

### Description of illustrative embodiments

The invention is described in more detail below with reference to the accompanying drawing, in which:
Fig. 1 shows an embodiment of a cutter viewed from the side facing towards the shaft;
Fig. 2 shows the cutter in accordance with Fig. 1 viewed from the side on which the cutting edge projects;
Fig. 3 shows the cutter in accordance with Fig. 1 viewed from the outward-facing side;
Fig. 4 is a section taken along the line A-A in Fig. 1; and
Fig. 5 is a section taken along the line B-B in Fig. 3.

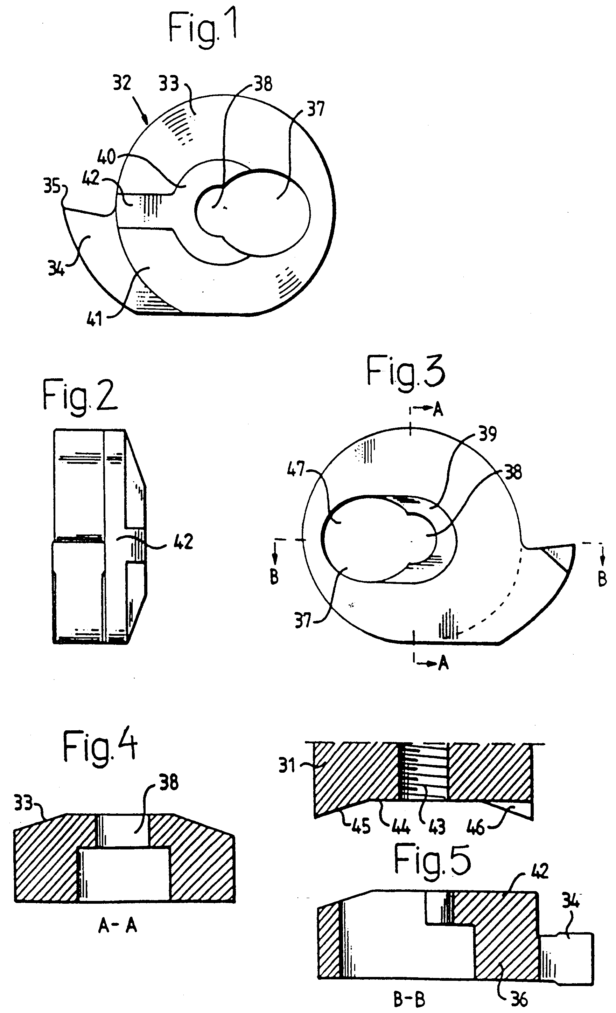

The embodiment in accordance with Figs. 1-5 can be used for the machining of holes and similar with a diameter only slightly exceeding the diameter of the shaft of the tool holder.

The cutter in accordance with Figs. 1-5, which is generally designated by 32, consists of an essentially circular main part 33 and an axially displaced essentially radially extending projection 34, which supports the cutting edge 35. The side 36 facing outwards from the shaft designated by 31 exhibits a through hole with an essentially round large hole part 37 situated eccentrically or in a radially offset fashion away from the side with the projection 34, and overlapping a smaller central hole part 38 together forming a common opening. The centrally situated hole part having a smaller diameter or area than the former hole, is surrounded by a countersunk surface 39 arranged concentrically around it, and extending as far as the edge of the first hole part 37. The countersunk part forms a step-like edge around the centrally situated hole part 38.

The side of the cutter 32 facing towards the supporting holder shaft, which can be appreciated most clearly from Figs. 1, 2, 4 and 5, exhibits an inner plane surface 40, which encloses the major proportion of the central hole part 38 and in so doing terminates at the further hole part 37. Situated radially outside the inner central surface 40 is a conically tapered surface 41 with a outwardly top angle of say the order of 140°, which is partly intersected by the larger hole part 37. A heel 42, the outward-facing side of which lies in the same plane as the inner plane central surface 40, extends radially over the inclined surface 41 in the direction of the edge projection 34, 35. The heel thus exhibits essentially parallel triangular lateral surfaces.

The end part of the supporting holder shaft for the cutter 32 is shaped in a complementary fashion and has a central threaded bore 43 surrounded by an inner plane annular surface 44, and an outer inclined surface 45. The inclined surface 45 is interrupted by a radial groove 46 with an outwardly increasing depth adapted to the shape or size of the heel 42.

When fitting a cutter 32 to the supporting holder shaft, a screw threaded into the axial threaded bore 43 and having a head must be unscrewed for a sufficient distance to permit the screw head to be introduced through the larger hole part 37, i.e. with the cutter in a laterally displaced position. The cutter is then centred on the end of the supporting shaft by making the central hole part 38 engage the shank of the screw, simultaneously as the heel 42 is fitted into the groove 46, which positions the cutter in such a way as to prevent it from rotating about its centre. Once the cutter has reached the indicated position, the screw 47 is tightened. Removal takes place in the reverse sequence.

The interaction between the plane and conical surfaces and the rotational stabilization by means of the heel 42 and groove 46 mean that the cutter is fixed in a stable fashion, and that the desired distribution of forces is obtained.

## Claims

1. Tool arrangement for cutting machining operations , in particular milling, in restricted spaces such as internally in holes and inside hollow work pieces, including a milling cutter holder shaft (31) and a holed milling cutter insert (32) to be attached to a free end of the holder shaft (31), the free end of the holder shaft (31) being provided with a threaded bore (43) and adjoining positioning surface portions (44, 45, 46), the side of the insert facing the holder end face also being provided with positioning surface portions (40, 41, 42) arranged to co-operate with the positioning surface portions (44, 45, 46) of the holder end face, the insert having a holed base portion, the hole thereof allowing a shank portion of a threaded screw device co-operating with the threaded bore of the holder shaft to pass through and at the outer end of the hole a hole adjoining surface portion (39) serving as an abutment for a head of the screw device, the insert further having a projection (34), extending essentially radially beyond the outer extension of the insert, the extreme tip (35) of the projection forming the cutting edge,
**characterized** in,
that the positioning surface portions (40-42, 44-46) at the holder shaft (31) end face and the side of the insert (32) facing said end face each include a conical inclined surface (45, 41), the one concave, the other convex,
that the hole (38) of the insert (32) adapted to the screw device shank opens up into a radially offset, wide hole portion (37), the dimension of which being adapted to the size of the screw head, and allowing the insert (32), in a radially displaced position, to be passed over the head of the loosened screw device on being moved towards or from its working position at the holder shaft end face (44, 45), and
that the co-operating conical opposite inclined surfaces (41, 45), on tightening of the screw device, are adapted to align the insert (32) and the hole portion (38) adapted to the screw shank to said screw shank received in the threaded bore (43).

2. Arrangement according to claim 1, **characterized** in that the positioning surface portions at the insert and the holder end face also include an inner essentially, radial and flat surface (44, 40) adjacent the threaded bore (43) for the threaded screw device at the holder shaft (31) and the hole (38) at the insert (32), respectively.

3. Arrangement according to claim 1 or 2, **characterized** in that at the holder end face and insert face, respectively, an essentially radially extending groove (46) intersects the concave one of the opposed surfaces, and that a complementary essentially radially extending heel (42) protrudes from the convex one, the heel (42) to be received in the groove (46) for interlocking the holder shaft (31) and the cutter insert (32) against relative rotation.

4. Arrangement according to claim 1, **characterized** in, that the abutment surface (39) at the side of the cutter insert (32) facing away from the holder shaft (31) end is countersunk so that the head of the screw device engaging same is below the outwardly facing cutter insert end side.

## Patentansprüche

1. Werkzeugaufbau für spanabhebende Bearbeitungsvorgänge, insbesondere das Fräsen, in eingeschränkten Räumen, etwa im Inneren von Löchern und innerhalb von hohen Werkstücken, mit einer Fräswerkzeughaltewelle (31) und einem an einem freien Ende der Haltewelle (31) zu befestigenden, von einem Loch durchsetzten Fräswerkzeugeinsatz (32), wobei das freie Ende der Haltewelle (31) versehen ist mit einem Gewindeloch (43) und benachbarten Positionieroberflächenabschnitten (44, 45, 46), die der Halterendfläche zugewandte Seite des Einsatzes ferner mit zum Zusammenwirken mit den Positionieroberflächenabschnitten (44, 45, 46) der Halterendfläche ausgelegten Positionieroberflächenabschnitten (40, 41, 42) versehen ist, der Einsatz einen von einem Loch durchsetzten Basisabschnitt dessen Loch einen mit dem Gewindeloch der Haltewelle zusammenwirkenden Schaftabschnitt eines Gewindeschraubenelements hindurchtreten läßt, und an dem Außenende des Loches einen dem Loch benachbarten Oberflächenabschnitt (39) aufweist, der als Anschlag für einen Kopf des Schraubenelements dient, der Einsatz ferner einen Vorsprung (34) aufweist, der sich im wesentlichen radial über die Außenerstreckung des Einsatzes hinaus erstreckt, und die äußerste Spitze (35) des Vorsprungs die Schneidkante bildet,
dadurch gekennzeichnet,
daß die Positionieroberflächenabschnitte (40-42, 44-46) an der Endfläche der Haltewelle (31) und der der Endfläche zugewandten Seite des Einsatzes (32) jeweils eine konisch geneigte Oberfläche (45, 41) aufweisen, eine konkav, die andere konvex,
daß sich das an den Schraubenelementschaft angepaßte Loch (38) des Einsatzes (32) in einen radial versetzten weiten Lochabschnitt (37) hinein öffnet, dessen Abmessung an die Größe des Schraubenkopfes angepaßt ist, und zuläßt, daß der Einsatz (32) in radial versetzter Position über den Kopf des gelösten Schraubenelements bei einer Bewegung in oder aus der Arbeitsposition an der Halterwellenendfläche (44, 45) geführt wird, und
daß die zusammenwirkenden, gegenüberliegenden, konischen geneigten Oberflächen (41, 45) dazu ausgelegt sind, beim Anziehen des Schraubenelements den Einsatz (32) und den an den Schraubenschaft angepaßten Lochabschnitt (38) auf den in dem Gewindeloch (43) aufgenommenen Schraubenschaft auszurichten.

2. Aufbau nach Anspruch 1, dadurch gekennzeichnet, daß die Positionieroberflächenabschnitte an dem Einsatz und der Halterendfläche ferner jeweils eine dem Gewindeloch (43) für das Gewindeschraubenelement an der Halterwelle (31) bzw. dem Loch (38) an dem Einsatz (32) benachbarte innere, im wesentlichen radiale und flache Oberfläche (44, 40) aufweisen.

3. Aufbau nach Anspruch 1 oder 2, dadurch gekennzeichnet, daß jeweils an der Halterendfläche und der Einsatzfläche eine im wesentlichen radial ausgedehnte Rille (46) die konkave der gegenüberliegenden Oberflächen schneidet und ein komplementärer, im wesentlichen radial ausgedehnter Rücken (42) von der konvexen vorsteht, wobei der Rücken (42) in der Rille (46) zum Verriegeln der Halterwelle (31) und des Werkzeugeinsatzes (32) gegen eine Relativrotation aufgenommen wird.

4. Aufbau nach Anspruch 1, dadurch gekennzeichnet, daß die Anschlagoberfläche (39) an der von dem Ende der Halterwelle (31) wegweisenden Seite des Werkzeugeinsatzes (32) so abgesenkt ist, daß der Kopf des mit dieser in Eingriff stehenden Schraubenelements unterhalb der nach außen weisenden Werkzeugeinsatzendseite liegt.

## Revendications

1. Arrangement d'outils pour des opérations d'usinage de coupe, en particulier de fraisage, dans des espaces restreints tels qu'à l'intérieur de trous et à l'intérieur de pièces d'ouvrage creuses, comprenant un arbre porteur d'outils de coupe de fraisage (31) et un intercalaire creux d'outils de coupe de fraisage (32) devant être fixé à une extrémité libre de l'arbre porteur (31), l'extrémité libre de l'arbre porteur (31) présentant un alésage fileté (43) et des parties de surface de positionnement contigues (44, 45, 46), le côté de l'intercalaire dirigé vers la face d'extrémité du porteur présentant également des parties de surface de positionnement (40, 41, 42) prévues pour coopérer avec les parties de surface de positionnement (44, 45, 46) de la face d'extrémité du porteur, l'intercalaire présentant une partie de base creuse dont le trou permet à une partie de tige d'un dispositif à vis filetée coopérant avec l'alésage fileté de l'arbre porteur de passer à travers et, à l'extrémité externe du trou, une partie de surface (39) contiguë au trou servant de butée pour une tête du dispositif à vis, l'intercalaire présentant en outre une saillie (34) s'étendant de manière essentiellement radiale au-delà de l'extension extérieure de l'intercalaire, le bout extrême (35) de la salle formant le bord de coupe,
**caractérisé en ce**
que les parties de surface de positionnement (40 à 42, 44 à 46) au niveau de la face d'extrémité de l'arbre porteur (31) et le côté de l'intercalaire (39) dirigé vers ladite face d'extrémité comprennent chacun une surface à inclinaison conique (45, 41), l'une concave l'autre convexe,
que le trou (38) de l'intercalaire (32) adapté à la tige du dispositif à vis débouche dans une large partie de trou décalée radialement (37) dont les dimensions sont adaptées à la taille de la tête de vis, et permettant à l'intercalaire (32), dans une position déplacée radialement, d'être amené à passer sur la tète du dispositif à vis desserré lorsqu'il est déplacé vers sa position de travail ou à partir de celle-ci au niveau de la face d'extrémité de l'arbre porteur (44, 45), et
que les surfaces coopérantes à inclinaisons coniques opposées (41, 45) lors du serrage du dispositif à vis, sont prévues pour aligner l'intercalaire (32) et la partie de trou (38) adaptée à la tige de vis avec ladite tige de vis reçue dans l'alésage fileté (43).

2. Arrangement selon la revendication 1, **caractérisé** en ce que les parties de surface de positionnement au niveau de l'intercalaire et de la face d'extrémité du porteur comprennent également une surface radiale et plane essentiellement intérieure (44, 40) adjacente à l'alésage fileté (43) respectivement pour le dispositif à vis filetée au niveau de l'arbre porteur (31) et pour le trou (38) au niveau de l'intercalaire (32).

3. Arrangement selon la revendication 1 ou 2, **caractérisé** en ce que, au niveau respectivement de la face d'extrémité du porteur et de la face de l'intercalaire, une rainure (46) s'étendant de manière essentiellement radiale coupe la surface concave parmi les surfaces opposées, et en ce qu'un talon complémentaire (42) s'étendant de manière essentiellement radiale fait saillie de la surface convexe, le talon (42) devant être reçu dans la rainure (46) pour verrouiller ensemble l'arbre porteur (31) et l'intercalaire d'outils de coupe (32) en en empêchant une rotation relative.

4. Arrangement selon la revendication 1, **caractérisé** en ce que la surface de butée (39) au niveau du côté de l'intercalaire d'outils de coupe (32) dirigé à l'opposé de l'extrémité de l'arbre porteur (31) est fraisée de telle manière que la tête du dispositif à vis s'engageant avec celle-ci se trouve en dessous du côté d'extrémité de l'intercalaire d'outils de coupe dirigé vers l'extérieur.
